(19) Europäisches Patentamt
European Patent Office
Office européen des brevets

(11) **EP 4 003 757 B1**

(12) **FASCICULE DE BREVET EUROPEEN**

(45) Date de publication et mention de la délivrance du brevet:
**05.07.2023 Bulletin 2023/27**

(21) Numéro de dépôt: **20757936.8**

(22) Date de dépôt: **27.07.2020**

(51) Classification Internationale des Brevets (IPC):
**B60C 1/00** *(2006.01)*    **B60C 11/03** *(2006.01)*
**B60C 11/12** *(2006.01)*    **C08C 19/25** *(2006.01)*
**C08L 19/00** *(2006.01)*    **B60C 11/00** *(2006.01)*
**C08L 15/00** *(2006.01)*    **C08L 57/02** *(2006.01)*
**C08L 91/00** *(2006.01)*    **C08K 3/36** *(2006.01)*

(52) Classification Coopérative des Brevets (CPC):
(C-Sets disponibles)
**B60C 1/0016; B60C 11/0302; B60C 11/0318;
B60C 11/12; C08K 3/36; C08L 15/00; C08L 57/02;
C08L 91/00;** B60C 2011/0016; B60C 2011/0025;
B60C 2011/0313; B60C 2011/129; B60C 2011/1295

(Cont.)

(86) Numéro de dépôt international:
**PCT/FR2020/051373**

(87) Numéro de publication internationale:
**WO 2021/019175 (04.02.2021 Gazette 2021/05)**

(54) **PNEUMATIQUE COMPORTANT UNE BANDE DE ROULEMENT**

REIFEN MIT LAUFFLÄCHE

TYRE COMPRISING A TREAD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.07.2019 FR 1908518**

(43) Date de publication de la demande:
**01.06.2022 Bulletin 2022/22**

(73) Titulaire: **COMPAGNIE GENERALE DES
ETABLISSEMENTS MICHELIN
63000 Clermont-Ferrand (FR)**

(72) Inventeurs:
• **BOISDON, Bertrand
63040 Clermont-Ferrand Cedex 9 (FR)**
• **VANTAL, Marie-Hélène
63040 Clermont-Ferrand Cedex 9 (FR)**

(74) Mandataire: **Le Cam, Stéphane Georges Elie
Manufacture Française des
Pneumatiques Michelin
DCJ/PI - F35 - Ladoux
23, place des Carmes-Déchaux
63040 Clermont-Ferrand Cedex 9 (FR)**

(56) Documents cités:
EP-A1- 0 775 600       EP-A1- 3 156 259
DE-A1-102007 044 435    FR-A1- 3 039 097
JP-A- H 061 119

(52) Classification Coopérative des Brevets (CPC):
(Cont.)

C-Sets
**C08L 15/00, C08L 57/02, C08L 91/00**

**Description**

**Domaine technique**

La présente invention concerne un pneumatique pour véhicule automobile dont la bande de roulement comprend une pluralité de rainures obliques présentant un fort élancement. L'invention est plus particulièrement adaptée pour un pneumatique destiné à équiper un véhicule de tourisme ou une camionnette.

**Technique antérieure**

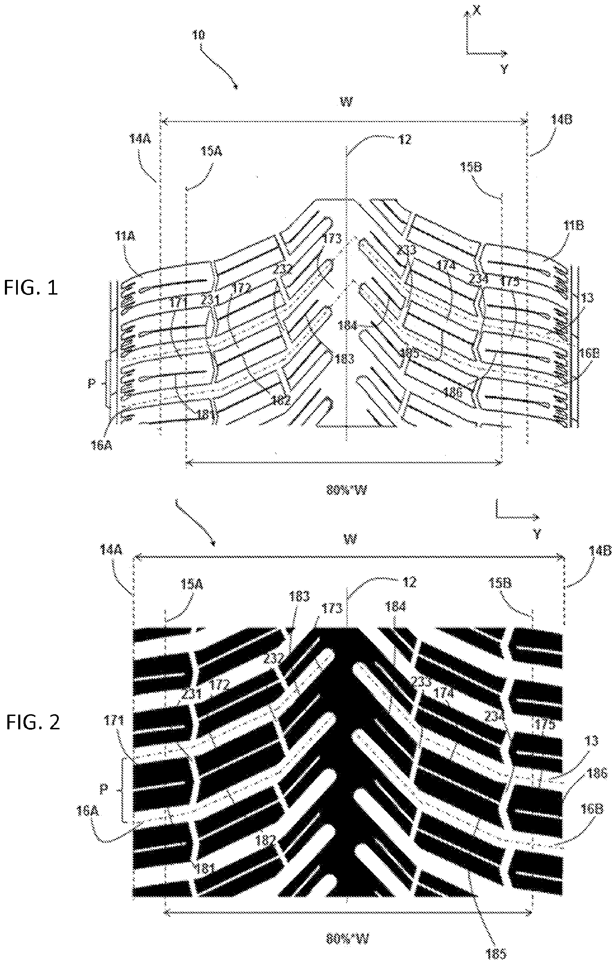

De manière connue, un pneumatique destiné à équiper un véhicule automobile comporte une bande de roulement. Cette bande de roulement comprend une surface de roulement et deux bords délimitant ladite surface de roulement. La surface de roulement correspond à l'ensemble des points de la bande de roulement qui entrent en contact avec un sol lorsque le pneumatique, gonflé à sa pression de référence et écrasé par une charge de référence, roule sur cette chaussée. La pression de gonflage de référence et la charge de référence sont définies dans les conditions d'utilisation du pneumatique, conditions précisées notamment par la norme E.T.R.T.O.. La surface de roulement de la bande de roulement comprend des creux formés par diverses rainures, telles que des rainures obliques. Les rainures obliques constituent des canaux destinés à évacuer l'eau sur les côtés de la bande de roulement. Il est connu du document GB2240522 une bande de roulement directionnelle comprenant une pluralité de rainures obliques. La bande de roulement comprend un axe central X et deux bords qui encadrent ladite bande de roulement et qui déterminent une largeur de bande de roulement, notée A sur la figure 1. La bande de roulement présente également une partie centrale de largeur notée K et qui correspond à environ 80% de la largeur A de la bande de roulement. Dans cette partie centrale, chaque rainure oblique présente un grand élancement, c'est-à-dire que la projection selon la direction circonférentielle X de ladite rainure est très proche voire supérieure à la moitié de la largeur K de cette partie centrale. Le très grand élancement des rainures obliques permet d'améliorer l'évacuation de l'eau hors de la bande de roulement et permet donc d'améliorer l'adhérence sur un sol mouillé. Cependant, les blocs de matière qui sont délimités par ces rainures obliques peuvent présenter un plus grand niveau d'usure du fait d'une moins bonne rigidité transversale. En outre, le comportement sur sol sec est également pénalisé par le grand élancement des rainures obliques. Enfin sur un sol enneigé, ce type de pneumatique présente une adhérence limitée. Par ailleurs, le document EP3156259-A1 divulgue un pneumatique avec une bande de roulement directionnelle comprenant des motifs, ayant un pas déterminé, qui se succèdent selon la direction circonférentielle et qui délimitent une pluralité des rainures obliques.

En outre, il existe une demande de plus en plus importante pour des pneumatiques dits « quatre saisons » présentant un excellent compromis d'adhérence sur sol enneigé/sol mouillé tout en préservant les performances sur sol sec. Ces pneumatiques quatre saisons ont pour objectif de rouler en sécurité toute l'année quelle que soit la météo. Ces pneumatiques ont généralement reçu la certification hiver 3PMSF (pour 3 Peak Mountain Snow Flake). Cette certification est notamment indiquée sur l'un ou les deux flancs desdits pneumatiques.

Il existe donc un besoin d'obtenir un pneumatique quatre saisons présentant des performances d'adhérence sur sol sec et sur sol mouillé qui soient proches d'un pneumatique été tout en assurant une très grande sécurité sur un sol enneigé et une résistance à l'usure améliorée.

**Exposé de l'invention**

La présente invention vise à remédier à cet inconvénient.

Plus particulièrement, la présente invention vise à améliorer le compromis d'adhérence sur sol enneigé/sol mouillé pour un pneumatique quatre saisons tout en améliorant les performances en usure d'un tel pneumatique.

L'invention concerne un pneumatique comportant une bande de roulement directionnelle.

Par « pneumatique », on entend tous les types de bandage en matériau caoutchoutique soumis en roulage à une pression interne ou non soumis à une telle pression interne en roulage (c'est le cas d'un bandage sans air comprimé, par exemple, de type Tweel™).

Par « bande de roulement » d'un pneumatique, on entend une quantité de matériau caoutchoutique délimitée par une surface de roulement. La surface de roulement regroupe l'ensemble des points du pneumatique qui vont entrer en contact avec un sol dans des conditions usuelles de roulage. Pour un pneumatique, les « conditions usuelles » de roulage sont les conditions d'utilisation définies par la norme ETRTO (European Tyre and Rim Technical Organisation). Ces conditions d'utilisation précisent la pression de gonflage de référence correspondant à la capacité de charge du pneu indiquée par son indice de charge et son code vitesse. Ces conditions d'utilisation peuvent aussi être dites « conditions nominales » ou « conditions d'usage ».

Par « bande de roulement directionnelle », on entend une bande de roulement dont les éléments de sculpture sont spécifiquement agencés pour optimiser les caractéristiques comportementales en fonction d'un sens de rotation prédéterminé. Ce sens de rotation est classiquement indiqué par une flèche sur le flanc du pneumatique.

La bande de roulement de l'invention comprend un axe central et deux bords encadrant ledit axe central et déterminant une largeur de bande de roulement W, la largeur de la bande de roulement étant supérieure ou égale à 140 mm. Cette largeur de bande de roulement est déterminée à partir d'une empreinte réalisée de manière dynamique. Afin d'obtenir une telle empreinte, on dépose de l'encre noire sur une partie de la bande de roulement du pneumatique et on vient faire rouler cette partie encrée sur une feuille de papier selon une certaine vitesse d'avancement. Les conditions de réalisation d'une telle empreinte se font à la pression nominale, pour une charge correspondant à 0,76 fois la charge nominale et à une vitesse d'avancement de 100 mm/s. Par exemple pour un pneumatique de dimension 205/55R16 91V, les conditions de réalisation de l'empreinte se feront à une pression de 2,5 bar et pour une charge de 480 daN. L'ensemble des mesures pour la détermination de l'élancement E, de la densité d'incisions SD, de la densité moyenne d'incisions SDmoy se font par la suite à partir d'une empreinte de la bande de roulement roulant sur un support aux conditions de charge, de pression et de vitesse d'avancement telles que décrites ci-dessus.

La bande de roulement comprend une pluralité de motifs qui se succèdent selon la direction circonférentielle, chaque motif ayant un pas P.

« Par motif », on entend un ensemble de bloc qui est répété selon la direction circonférentielle. Cette répétition peut se faire à iso-dimension. La bande de roulement est dite alors monopas. En variante, cette répétition peut se faire avec des dimensions différentes, notamment des valeurs de pas différentes. La bande de roulement est dite alors multipas. Avantageusement, le nombre de valeurs de pas différent pour une bande de roulement multipas est compris entre 3 et 5 pas. De manière préférentielle, l'ensemble de bloc du motif s'étend sur toute la largeur W de bande de roulement. Chaque ensemble de bloc comprend au moins un bloc. « Par bloc », on entend un élément en relief délimité par des rainures et comprenant des parois latérales et une face de contact, cette dernière étant destinée à venir en contact avec un sol pendant le roulage.

« Par direction circonférentielle », on entend une direction qui est tangente à tout cercle centré sur l'axe de rotation. Cette direction est perpendiculaire à la fois à une direction axiale et à une direction radiale.

« Par direction axiale », on entend une direction parallèle à l'axe de rotation du pneumatique.

« Par direction radiale », on entend une direction qui est perpendiculaire à l'axe de rotation du pneumatique (cette direction correspond à la direction de l'épaisseur de la bande de roulement au centre de ladite bande de roulement).

« Par rainure », on entend une découpure dont la distance entre les parois de matière est supérieure à 2 mm.

« Par rainure oblique », on entend une rainure dont l'orientation principale fait un angle aigu compris entre 20° et 70° avec la direction axiale.

« Par rainure circonférentielle », on entend une rainure dont l'orientation principale est selon la direction circonférentielle.

« Par sillon », on entend une rainure circonférentielle qui s'étend sur toute la circonférence du pneumatique.

« Par incision », on entend une découpure dont la distance entre les parois de matière est inférieure ou égale à 2 mm. Il est également déterminé que la profondeur d'une incision dans la bande de roulement est supérieure ou égale à 1 mm. Dès lors, des découpures esthétiques, de type « grain d'orge », dont la profondeur est inférieure à 1 mm dans la bande de roulement ne sont pas considérés comme des incisions.

Les motifs délimitent une pluralité de rainures obliques, chaque rainure oblique s'étendant d'un des bords de la bande de roulement en direction de l'axe central mais sans atteindre ledit axe central. De cette manière, on s'assure que le centre de la bande de roulement est renforcé par de la matière, par exemple par une nervure de matière qui s'étend circonférentiellement. L'adhérence sur un sol sec de la bande de roulement est alors améliorée.

Dans une partie centrale de la bande de roulement centrée sur l'axe central et de largeur correspondant à 80% de la largeur W de ladite bande de roulement, tout ou partie des rainures obliques de la pluralité de rainures obliques a un élancement compris entre 0,85 et 1,5 et de préférence entre 0,87 et 1,1. Avec une telle valeur d'élancement dans la partie centrale de la bande de roulement, on s'assure d'une meilleure évacuation de l'eau hors de la bande de roulement et on limite en conséquence les risques d'hydroplanage.

« Par élancement » E, on entend le rapport entre une longueur projetée Lpx de la rainure oblique selon la direction circonférentielle avec la moitié de la largeur W de la largeur de la partie centrale de la bande de roulement, tel que

$$E = \frac{Lpx}{0,4*W}$$

.

Tout ou partie des motifs comprend au moins une incision. Une densité d'incision SD dans le motif est comprise entre 10 mm$^{-1}$ et 70 mm$^{-1}$.

Par « densité d'incision SD » on entend le rapport entre la somme de la/des longueur(s) projetée(s) de la/des incision(s) selon une direction axiale sur le produit du pas P du motif et de la largeur W de la bande de roulement tel

$$SD = \frac{\sum_{i=1}^{n} lpyi}{P*W} * 1000$$

que , avec n le nombre d'incisions dans le motif et Ipyi la longueur projetée de la ième incision.

Les caractéristiques de la bande de roulement ainsi énoncées permettent d'obtenir un pneumatique de type quatre saisons présentant un excellent compromis d'adhérence sur sol enneigé/sol mouillé/sol sec tout en améliorant les performances en usure de ce pneumatique.

Dans un mode de réalisation préférentiel, la bande de roulement comprend différents types de motifs Mj, avec j supérieur ou égal à 2, les motifs appartenant à un même type de motif ayant un même pas, le pas entre des motifs appartenant à deux types de motifs différents étant différent. La densité moyenne d'incision SDmoy est comprise entre 10 $mm^{-1}$ et 70 $mm^{-1}$, ladite densité moyenne d'incisions SDmoy correspondant à la moyenne des densités d'incisions SDj des motifs des différents types de motifs Mj sur toute la circonférence de la bande de roulement, ladite densité moyenne d'incisions SDmoy étant pondérée en fonction du nombre de motifs Nj par type de motif Mj et du pas Pj des motifs appartenant au type de motif Mj sur ladite circonférence de la bande de roulement, tel que

$$SDmoy = \frac{\sum_{j=1}^{m} (SDj*Nj*Pj)}{\sum_{j=1}^{m} (Nj*Pj)}$$

avec m le nombre de types de motifs différents, SDj la densité d'incisions dans un motif appartenant au type de motif Mj, Pj le pas des motifs appartenant au type de motif Mj, Nj le nombre de motifs appartenant au type de motif Mj.

Dans un mode de réalisation préférentiel, la densité d'incision SD ou la densité moyenne d'incision SDmoy est supérieure à 25 $mm^{-1}$ et/ou inférieure à 50 $mm^{-1}$.

Préférentiellement, la densité d'incision SD ou la densité moyenne d'incision SDmoy est comprise entre 30 $mm^{-1}$ et 40 $mm^{-1}$.

Avantageusement, chaque motif comprend un ensemble de bloc comportant au moins un bloc. Le bloc a une hauteur radiale maximale Hmax à l'état neuf comprise entre 5,5 mm et 9 mm et de préférence entre 6 mm et 7,5 mm. En diminuant la hauteur radiale du bloc, on améliore globalement la résistance au roulement du pneumatique ainsi que le comportement routier sur sol sec. Le fort élancement de la bande de roulement permet de de compenser, au moins en partie, une hauteur radiale de bloc plus faible pour la performance d'évacuation, de l'eau.

Avantageusement, les blocs sont en matériau caoutchoutique.

Par « matériau caoutchoutique », on entend un matériau polymérique de type mélange élastomérique, c'est-à-dire un matériau polymérique obtenu par mélangeage d'au moins un élastomère, d'au moins une charge renforçante et d'un système de réticulation.

Une caractéristique physique usuelle d'un mélange élastomérique est sa température de transition vitreuse Tg, température à laquelle le mélange élastomérique passe d'un état caoutchouteux déformable à un état vitreux rigide. La température de transition vitreuse Tg d'un mélange élastomérique est généralement déterminée lors de la mesure des propriétés dynamiques du mélange élastomérique, sur un viscoanalyseur (Matravib VA4000), selon la norme ASTM D 5992-96. La mesure des propriétés dynamiques est réalisée sur un échantillon de mélange élastomérique vulcanisé, c'est-à-dire cuit jusqu'à un taux de conversion d'au moins 90%, l'échantillon ayant la forme d'une éprouvette cylindrique ayant une épaisseur égale à 2 mm et une section égale à 78,5 $mm^2$. On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", et la perte dynamique tg$\delta$, égale au rapport G"/G'. La température de transition vitreuse Tg est la température à laquelle la perte dynamique tg$\delta$ atteint un maximum lors du balayage en température. La valeur de G* mesurée à 60°C est représentative de la rigidité du matériau caoutchoutique, c'est-à-dire de sa résistance à la déformation élastique.

Avantageusement, la composition du matériau caoutchoutique du ou des blocs du motif a une température de transition vitreuse Tg comprise entre -40°C et -10°C et préférentiellement entre -35°C et -15°C. De plus la composition du matériau caoutchoutique a un module de cisaillement dynamique mesuré à 60°C comprise entre 0,5 MPa et 2 MPa, et préférentiellement entre 0,7 MPa et 1,5 MPa.

Au niveau de la composition chimique, le mélange élastomérique du ou des blocs comprend 100 pce (parties en poids pour cent parties en poids d'élastomère) d'un élastomère dinénique modifié. Par définition, un élastomère diénique est un homopolymère ou un copolymère, issu aux moins en partie des monomères diènes, c'est-à-dire des monomères porteurs de deux doubles liaisons carbone-carbone conjuguées ou non. Préférentiellement, le mélange élastomérique comprend l'élastomère diénique modifié à un taux au moins égal à 20 pce.

L'élastomère diénique modifié comprend au moins un groupe fonctionnel comprenant un atome de silicium, ce dernier se situant au sein de la chaîne principale, y compris les extrémités de chaîne. L'expression « atome se situant au sein de la chaîne principale de l'élastomère, y compris les extrémités de chaîne », s'entend ici comme n'étant pas un atome pendant (ou latéral) le long de la chaîne principale de l'élastomère mais étant un atome intégré à la chaîne principale. Ainsi, la composition du bloc comprend préférentiellement un mélange élastomérique, ledit mélange élastomérique comportant un élastomère diénique modifié comprenant au moins un groupe fonctionnel comprenant un atome de silicium, ce dernier se situant au sein de la chaîne principale de l'élastomère y compris les extrémités de chaîne.

L'élastomère diénique modifié comprenant un groupe fonctionnel comprenant un atome de silicium peut être un élastomère modifié comprenant au moins une fonction silanol située en une extrémité de la chaîne principale de l'élastomère. Des élastomères diéniques modifiés correspondant sont décrits notamment dans les documents EP 0 778 311 A1, WO 2011/042507 A1.

Alternativement et de manière préférentielle, le groupe fonctionnel se situe dans la chaîne élastomère principale, on dira alors que l'élastomère diénique est couplé ou encore fonctionnalisé en milieu de chaîne. L'atome de silicium du groupe fonctionnel lie alors les deux branches de la chaîne principale de l'élastomère diénique. L'atome de silicium du groupe fonctionnel peut être substitué par au moins une fonction alcoxy, éventuellement totalement ou partiellement hydrolysée en hydroxyle.

De manière particulièrement avantageuse, l'élastomère diénique modifié est majoritairement fonctionnalisé en milieu de chaîne par un groupe alcoxysilane lié aux deux branches de l'élastomère diénique modifié par l'intermédiaire de l'atome de silicium.

L'atome de silicium du groupe fonctionnel peut être substitué par au moins une fonction alcoxy, éventuellement totalement ou partielle hydrolysée en hydroxyle, l'atome de silicium peut également être substitué, directement ou par l'intermédiaire d'un radical hydrocarboné divalent, par au moins une autre fonction comprenant au moins un hétéroatome choisi parmi N, S, O, P. De préférence, l'atome de silicium est substitué par au moins une autre fonction par l'intermédiaire d'un radical hydrocarboné divalent, plus préférentiellement aliphatique linéaire en $C_1$- $C_{18}$. On peut, à titre d'exemple, citer parmi ces autres fonctions, les amines primaires, secondaires ou tertiaires, cycliques ou non, les isocyanates, les imines, les cyano, les thiols, les carboxylates, les époxydes, les phosphines primaires, secondaires ou tertiaires. L'autre fonction est de préférence une amine tertiaire, plus préférentiellement un groupement diéthylamino- ou diméthylamino-. La fonction alcoxy est de préférence méthoxy, éthoxy, butoxy ou propoxy. Des élastomères diéniques modifiés correspondant à ces variantes sont décrits notamment dans les documents WO 2009/133068 A1, WO 2015/018743 A1.

La modification de l'élastomère diénique par au moins un groupe fonctionnel comprenant un atome de silicium, n'exclut pas une autre modification de l'élastomère par exemple en extrémité de chaîne par une fonction amine introduite lors de l'initiation de la polymérisation, tel que décrit dans WO 2015/018774 A1, WO 2015/018772 A1.

En particulier, l'élastomère diénique modifié comprenant un groupe fonctionnel comprenant un atome de silicium est avantageusement un élastomère modifié comprenant au sein de sa structure au moins un groupe alcoxysilane lié à l'élastomère par l'atome de silicium, et au moins une fonction comprenant un atome d'azote.

Dans ce cas, l'élastomère diénique modifié présente avantageusement au moins deux, de préférence l'ensemble des caractéristiques suivantes :

- la fonction comprenant un atome d'azote est une amine tertiaire, plus particulièrement un groupement diéthylamino- ou diméthylamino-,

- la fonction comprenant un atome d'azote est portée par le groupe alcoxysilane par l'intermédiaire d'un groupement espaceur défini comme un radical hydrocarboné aliphatique en $C_1$-$C_{10}$, plus préférentiellement encore le radical hydrocarboné linéaire en $C_2$ ou $C_3$,

- le groupe alcoxysilane est un méthoxysilane ou un éthoxysilane, éventuellement partiellement ou totalement hydrolysé en silanol.

De tels élastomères diéniques modifiées peuvent être obtenus par le procédé décrit dans la demande de brevet EP 2 285 852, suivie d'une hydrolyse de la fonction alcoxysilane en fonction silanol. La réaction d'hydrolyse de la fonction alcoxysilane en fonction silanol peut par exemple être conduite selon le mode opératoire décrit dans la demande de brevet EP 2 266 819 A1.

Préférentiellement, l'élastomère diénique modifié selon l'invention est un polymère de 1,3-butadiène, plus préférentiellement un copolymère butadiène-styrène (SBR).

Avantageusement, l'élastomère diénique modifié présente une température de transition vitreuse comprise dans un domaine allant de -105°C à -70°C, de préférence de -100°C à -75°C, de préférence encore de -95°C à -80°C.

L'élastomère diénique modifié selon l'invention peut être, selon différentes variantes, utilisé seul dans le mélange élastomérique ou en coupage avec au moins un autre élastomère diénique conventionnellement utilisé en pneumatique, qu'il soit étoilé, couplé, fonctionnalisé par exemple à l'étain ou au silicium, ou non.

Egalement du point de vue de sa composition chimique, le mélange élastomérique de la bande de roulement selon l'invention comprend une résine plastifiante de type résine thermoplastique à un taux au moins égal à 10 pce, de préférence de 10 à 100 pce, de préférence de 20 à 50 pce.

Dans une variante de réalisation de l'invention, le pneumatique a une certification hiver 3PMSF, ladite certification étant indiquée sur un flanc du pneumatique.

La présente invention sera mieux comprise à la lecture de la description détaillée de modes de réalisation pris à titre d'exemples nullement limitatifs et illustrés par les dessins annexés sur lesquels :

La figure 1 est une vue schématique montrant une partie d'une bande de roulement d'un pneumatique conforme à l'invention selon un premier mode de réalisation ;

La figure 2 est une empreinte de la bande de roulement de la figure 1 ;

La figure 3 est une partie de l'empreinte de la figure 2 centrée sur une rainure oblique ;

La figure 4 est une partie de l'empreinte de la bande de roulement de la figure 2, ladite figure étant centrée sur un premier motif de pas P1 ;

La figure 5 est une partie de l'empreinte de la bande de roulement de la figure 1, ladite figure étant centrée sur un second motif de pas P2 ;

La figure 6 est une partie de l'empreinte de la bande de roulement de la figure 1, ladite figure étant centrée sur un troisième motif de pas P3 ;

La figure 7 est une empreinte d'une bande de roulement d'un pneumatique conforme à l'invention selon un second mode de réalisation.

L'invention n'est pas limitée aux modes de réalisation et variantes présentées et d'autres modes de réalisation et variantes apparaîtront clairement à l'homme du métier.

Sur les différentes figures, les éléments identiques ou similaires portent les mêmes références. C'est ainsi que les références utilisées pour identifier des éléments sur la bande de roulement sont reprises pour identifier ces mêmes éléments sur l'empreinte réalisée à partir de ladite bande de roulement.

Sur la figure 1 est représenté partiellement un pneumatique selon un premier mode de réalisation de l'invention. Ce pneumatique comprend une bande de roulement 10 et deux flancs 11A, 11B encadrant ladite bande de roulement 10. Les flancs 11A, 11B forment les parties latérales du pneumatique. Chaque flanc comporte à son extrémité un bourrelet destiné à prendre assise sur une jante d'une roue. Les flancs 11A, 11B délimitent la bande de roulement 10 au niveau d'un premier bord 14A et d'un second bord 14B. Le premier bord 14A et le second bord 14B encadrent un axe central 12 de la bande de roulement 10. Ce premier bord 14A et ce second bord 14B déterminent une largeur de bande de roulement W. Cette largeur de bande de roulement est ici supérieure à 140 mm. La bande de roulement 10 comprend également une partie centrale centrée sur l'axe central 12 et dont la largeur correspond à 80% de la largeur W de ladite bande de roulement 10. Cette partie centrale est délimitée par un troisième bord 15A et un quatrième bord 15B. La bande de roulement 10 comprend une pluralité de motifs 13 qui se succèdent selon la direction circonférentielle X.

Sur la bande de roulement, chaque motif 13 comprend un ensemble de blocs comprenant ici un premier bloc 171, un second bloc 172, un troisième bloc 173, un quatrième bloc 174 et un cinquième bloc 175. Le premier bloc 171 s'étend à partir du premier bord 14A de la bande de roulement 10 jusqu'à une première découpure oblique 231. Le second bloc 172 s'étend à partir de la première découpure oblique 231 jusqu'à une seconde découpure oblique 232. Le troisième bloc 173 s'étend de part et d'autre de l'axe central 12 entre la seconde découpure 232 et une troisième découpure 233. Le quatrième bloc 174 s'étend à partir de la troisième découpure 233 jusqu'à une quatrième découpure 234. Le cinquième bloc 175 s'étend à partir de la quatrième découpure 234 jusqu'au second bord 14B. Le premier bloc 171 et le cinquième bloc 175 s'étendent au-delà des limites 14A et 14B de la bande de roulement 10. Les zones de premier bloc 171 et de cinquième bloc 175 qui sont en dehors de la bande de roulement ne sont pas destinés à entrer en contact avec un sol dans des conditions normales de roulage.

Le premier bloc 171, le second bloc 172, le troisième bloc 173, le quatrième bloc 174 et le cinquième bloc 175 sont délimités, au moins en partie, par des rainures obliques 16A, 16B. Dans la bande de roulement de la figure 1, les rainures obliques 16A, 16B s'étendent respectivement à partir du premier bord 14A et à partir du second bord 14B en direction de l'axe central 12 mais sans atteindre ledit axe central. Ces rainures obliques 16A, 16B favorisent l'évacuation de l'eau hors de la bande de roulement lors d'un roulage sur une chaussée mouillée. Chaque bloc 171, 172, 173, 174, 175 comprend respectivement une première incision 181, une seconde incision 182, une troisième incision 183, une quatrième incision 184, une cinquième incision 185 et une sixième incision 186 pour favoriser l'adhérence du pneumatique sur un sol enneigé. Plus particulièrement, la première incision 181 s'étend à partir du premier bord 14A jusqu'à une extrémité d'incision de la première incision 181. La seconde incision 182 s'étend à partir de la première découpure oblique 231 jusqu'à la seconde découpure oblique 232. La troisième incision 183 s'étend à partir de la seconde découpure oblique 232 jusqu'à une extrémité de la troisième incision 183. La quatrième incision 184 s'étend à partir d'une extrémité de la quatrième incision 184 jusqu'à la troisième découpure oblique 233. La cinquième incision 185 s'étend à partir de la troisième découpure oblique 233 jusqu'à la quatrième découpure oblique 234. La sixième incision 186 s'étend à partir d'une extrémité de la sixième incision 186 pour atteindre le second bord 14B de la bande de roulement.

Chaque incision 181, 182, 185, 186 divise le bloc associé 171, 172, 174, 175 en deux parties de largeur globalement identique. Dans le troisième bloc 173, la longueur des incisions 183 et 184 est limitée. La troisième incision 183 et la quatrième incision 184 ne s'étendent pas ainsi jusqu'à l'axe central 12.

La figure 2 représente une empreinte de la bande de roulement de la figure 1.

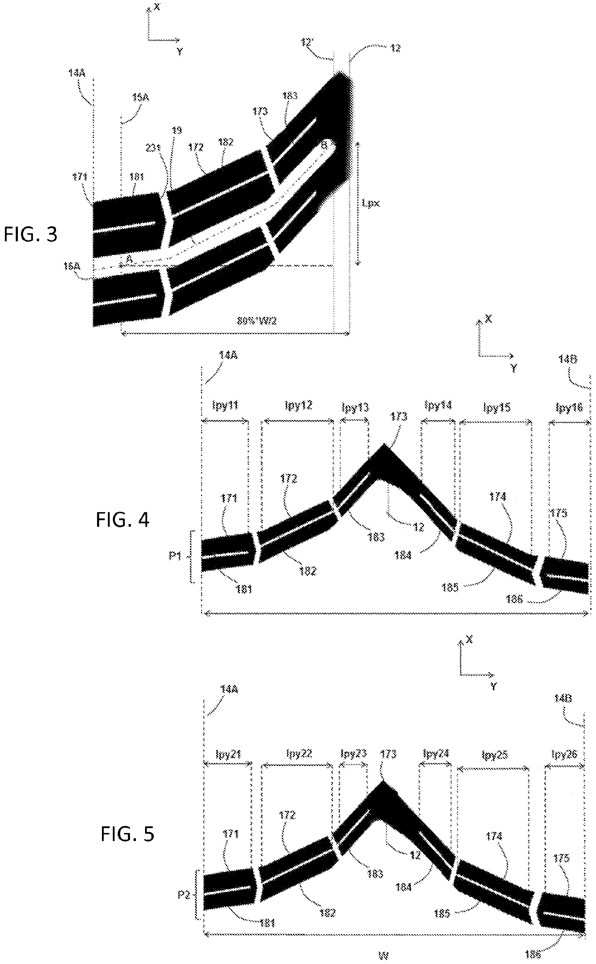

Cette empreinte a été réalisée de manière dynamique dans des conditions telles que décrites précédemment. Les éléments en creux tels que les rainures obliques 16A, 16B, les incisions 181, 182, 183, 184, 185, 186 sont représentés en blanc. Les blocs 171, 172, 173, 174, 175 sont illustrés en noir. A partir de cette empreinte, il est possible de déterminer un élancement E des rainures obliques (figure 3) et une densité d'incisions SD dans les blocs 171, 172, 173, 174, 175 (figure 4 à 6).

La figure 3 illustre ainsi une partie de l'empreinte de la figure 2 centrée sur une rainure oblique 16A. Dans la bande de roulement, cette rainure oblique 16A débute à partir du premier bord 14A et s'arrête avant d'atteindre l'axe central 12.

Il est possible de déterminer un élancement E de la rainure oblique 16A dans la partie centrale de la bande de roulement, c'est-à-dire déterminer le niveau de son inclinaison dans cette partie centrale. Comme il a déjà été précisé, la partie centrale est délimitée en partie par le troisième bord 15A. L'élancement E est déterminé à partir d'une longueur projetée Lpx de la rainure oblique 16A selon la direction circonférentielle X et de la moitié de la largeur de la partie centrale de la bande de roulement 0,8*W/2, tel que

$$E = \frac{Lpx}{0,4*W}$$

. Plus particulièrement, la longueur projetée Lpx est mesurée entre un premier point A et un second point B. Le point A est déterminé à l'intersection entre une médiane 19 de la rainure oblique 16A et le troisième bord 15A. La médiane 19 de la rainure oblique 16A sépare ladite rainure oblique 16A en deux demi-rainures obliques de même largeur. Le point B est déterminé à l'intersection entre la médiane 19 de la rainure oblique 16A et l'extrémité de la rainure oblique 16A. L'élancement E est ici compris entre 0,85 et 1,5 et de préférence entre 0,87 et 1,1.

Chaque motif 13 présente un pas P. Ce pas P est déterminé comme la distance entre les centres de deux rainures obliques adjacentes encadrant les blocs 171, 172, 173, 174, 175. On notera que dans l'exemple du mode de réalisation de la figure 1, la bande de roulement 10 comprend trois pas P1, P2, P3 de valeurs distinctes.

Les figures 4, 5 et 6 illustrent trois motifs d'une même bande de roulement appartenant à trois types de motifs différents présentant des pas P1, P2, P3 distincts. La figure 4 illustre ainsi un premier motif présentant un premier pas P1. Comme il a déjà été décrit, le premier motif comprend le premier bloc 171, le second bloc 172, le troisième bloc 173, le quatrième bloc 174 et le cinquième bloc 175. Le premier bloc 171 comprend la première incision 181. Le second bloc 172 comprend la seconde incision 182. Le troisième bloc 173 comprend ici la troisième incision 183 et la quatrième incision 184. Le quatrième bloc 174 comprend la cinquième incision 185. Le cinquième bloc 175 comprend la sixième incision 186. Pour chaque incision, il est possible de déterminer une longueur projetée d'incision selon la direction axiale Y. Ainsi la première incision 181 a une première longueur projetée lpy11, la seconde incision 182 a une seconde longueur projetée lpy12, la troisième incision 183 a une troisième longueur projetée lpy13, la quatrième incision 184 a une quatrième longueur projetée lpy14. La cinquième incision a une cinquième longueur projetée Lpy15. La sixième incision a une sixième longueur projetée Lpy16. Il est possible de déterminer une première densité d'incision SD1 dans l'ensemble de blocs de pas P1 comprenant le premier bloc 171, le second bloc 172, le troisième bloc 173, le quatrième bloc 174, le cinquième bloc 175. Cette première densité d'incision SD1 correspond au rapport entre la somme de longueurs projetées lpy11, lpy12, lpy13, lpy14, lpy15, lpy16 des incisions 181, 182, 183, 184, 185, 186 sur le produit du pas P1 du motif et de la largeur W de la bande de roulement, l'ensemble étant multiplié par 1000, tel que

$$SD1 = \frac{(lpy11+lpy12+lpy13+lpy14+lpy15+lpy16)}{P1*W} * 1000.$$

La figure 5 illustre un second motif présentant un second pas P2. Le second pas P2 a une valeur supérieure au premier pas P1. Comme pour le premier motif, il est possible de déterminer une seconde densité d'incisions SD2.

Cette seconde densité d'incisions SD2 est calculée à partir des longueurs projetées lpy21, lpy22, lpy23, lpy24, lpy25, lpy26 des incisions 181, 182, 183, 184, 185, 186 appartenant aux blocs 171, 172, 173, 174, 175. Cette seconde densité d'incision SD2 correspond alors au rapport entre la somme de longueurs projetées lpy21, lpy22, lpy23, lpy24, lpy25, lpy26 des incisions 181, 182, 183, 184, 185, 186 sur le produit du pas P2 du motif et de la largeur W de la bande de roulement, l'ensemble étant multiplié par 1000, tel que

$$SD2 = \frac{(lpy21+lpy22+lpy23+lpy24+lpy25+lpy26)}{P2*W} * 1000.$$

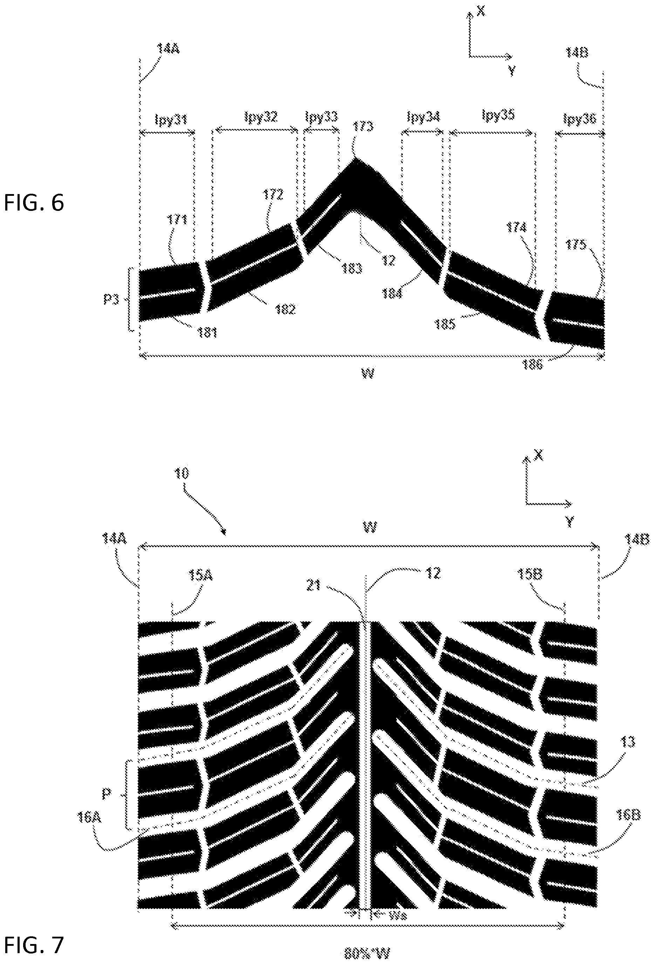

La figure 6 illustre un troisième motif présentant un troisième pas P3. Le troisième pas P3 a une valeur supérieure au second pas P2. Comme pour le premier motif et le second motif, il est possible de déterminer une troisième densité d'incisions SD3. Cette troisième densité d'incisions SD3 est calculée à partir des longueurs projetées lpy31, lpy32, lpy33, lpy34, lpy35, lpy36 des incisions 181, 182, 183, 184, 185, 186 appartenant aux blocs 171, 172, 173, 174, 175. Cette troisième densité d'incision SD3 correspond alors au rapport entre la somme de longueurs projetées lpy31, lpy32, lpy33, lpy34, lpy35, lpy36 des incisions 181, 182, 183, 184, 185, 186 sur le produit du pas P3 du motif et de la largeur W de la bande de roulement, l'ensemble étant multiplié par 1000, tel que

$$SD3 = \frac{(lpy31+lpy32+lpy33+lpy34+lpy35+lpy36)}{P3*W} * 1000.$$

Dans le mode de réalisation des figures 1 à 6, la bande de roulement comprend un arrangement de N1 motifs de pas P1, de N2 motifs de pas P2 et de N3 motifs de pas P3. Il est ainsi possible de déterminer une densité moyenne d'incision SDmoy correspondant à la moyenne des densités d'incisions SD1, SD2, SD3 des motifs de pas P1, P2, P3 sur toute la circonférence de la bande de roulement. La densité moyenne d'incisions SDmoy est ainsi pondérée en fonction du nombre de motifs N1, N2, N3 par type de motif et du pas P1, P2, p3, tel que :

$$SDmoy = \frac{(SD1*N1*P1+SD2*N2*P2+SD3*N3*P3)}{N1*P1+N2*P2+N3*P3}.$$

Les motifs de pas P1, P2, P3 sont arrangés de manière aléatoire sur la bande de roulement afin de limiter l'émergence d'un bruit du pneumatique en roulage. Ainsi pour un pneumatique de dimension 205/55 R 16, l'arrangement entre motifs de pas P1, P2 et P3 pourrait être le suivant : P1 P1 P2 P1 P2 P2 P2 P2 P1 P1 P2 P1 P1 P1 P2 P2 P3 P2 P2 P3 P2 P1 P2 P2 P1 P1 P1 P1 P2 P1 P2 P1 P1 P1 P1 P2 P1 P1 P2 P2 P3 P3 P3 P2 P2 P3 P3 P3 P3 P3 P2 P2 P1 P2 P2 P3 P2 P1 P2 P2 P1 P2 P3 P2 P2 P1 P2 P2 P2 P1 P1 P1 P2 P3 P2 P1. Un tel arrangement comporterait alors 21 motifs de pas P1, 35 motifs de pas P2 et 13 motifs de pas P3. Comme il a déjà été précisé, un pas P est déterminé comme la distance entre les centres de deux rainures obliques adjacentes encadrant un bloc. Afin de déterminer avec précision les valeurs des pas P1, P2 et P3, ceux-ci sont mesurés dans des groupes de motifs appartenant à un même type de motif par exemple dans des groupes de motifs P1 P1 P1, P2 P2 P2 et P3 P3 P3.

Dans un mode de réalisation préférentiel, la densité moyenne d'incision SDmoy est comprise entre 10 mm$^{-1}$ et 70 mm$^{-1}$.

Dans un mode de réalisation préférentiel, la densité moyenne d'incision SD moy est supérieure à 25 mm$^{-1}$ et/ou inférieure à 50 mm$^{-1}$.

Dans un autre mode de réalisation préférentiel, la densité moyenne d'incision SDmoy est comprise entre 30 mm$^{-1}$ et 40 mm$^{-1}$.

On notera que les troisièmes blocs 173 des différents motifs sont liés entre eux. L'ensemble de ces troisièmes blocs forme ainsi une nervure de matière qui s'étend tout le long de la circonférence du pneumatique.

La figure 7 illustre un second mode de réalisation de l'invention dans lequel la bande de roulement 10 comprend en autre un sillon de largeur Ws. Cette largeur Ws est mesurée selon la direction axiale Y. A partir de cette largeur Ws, il est possible de déterminer un ratio de surface de contact du sillon dit CSR correspondant au rapport de la largeur Ws

$$CSR = \frac{Ws}{W}$$

du sillon sur la largeur W de la bande de roulement, tel que. Dans une mode de réalisation préférentiel, le ratio de surface de contact CSR est inférieur ou égal à 0,15.

Pour l'ensemble des modes de réalisation illustrés aux figures 1 à 7, chaque bloc est formé à partir d'un matériau caoutchoutique. Dans un mode de réalisation préférentiel, la composition de ce matériau caoutchoutique présente une température de transition vitreuse comprise entre -40°C et -10°C, et préférentiellement entre -35°C et -15°C et un module de cisaillement mesuré à 60°C compris entre 0,5 MPa et 2 MPa, et préférentiellement entre 0,7 MPa et 1,5 MPa.

Dans un mode de réalisation préférentiel, la composition du matériau caoutchoutique des blocs est à base d'au moins :

- une matrice élastomère comprenant plus de 50% en masse d'un SBR solution qui porte une fonction silanol et une fonction amine ;
- 20 à 200 pce d'au moins une silice ;
- un agent de couplage pour coupler la silice au SBR solution ;
- 10 à 100 pce d'une résine hydrocarbonée présentant une Tg supérieure à 20°C ;
- 15 à 20 pce d'un plastifiant liquide.

Le SBR solution de ce mode de réalisation préférentiel est un copolymère de styrène et de butadiène préparé en solution. Il a pour caractéristique de porter une fonction silanol et une fonction amine. La fonction silanol du SBR solution portant une fonction silanol et une fonction amine peut par exemple être introduite par hydrosilylation de la chaîne élastomère par un silane portant un groupement alcoxysilane, suivie d'une hydrolyse de la fonction alcoxysilane en fonction silanol. La fonction silanol du SBR solution portant une fonction silanol et une fonction amine peut également être introduite par réaction des chaînes élastomères vivantes avec un composé polysiloxane cyclique tel que décrit dans EP 0 778 311. La fonction amine du SBR solution portant une fonction silanol et une fonction amine peut par exemple être introduite par un amorçage de la polymérisation avec un initiateur portant une telle fonction. Un SBR solution portant une fonction silanol et une fonction amine peut également être préparé par réaction des chaînes élastomères vivantes avec un composé portant une fonction alcoxysilane et une fonction amine selon le mode opératoire décrit dans la demande de brevet EP 2 285 852, suivie d'une hydrolyse de la fonction alcoxysilane en fonction silanol. Selon ce mode de préparation, la fonction silanol et la fonction amine sont préférentiellement situées à l'intérieur de la chaîne du SBR solution, en dehors des extrémités de chaîne. La réaction d'hydrolyse de la fonction alcoxysilane portée par le SBR solution en fonction silanol peut être conduite selon le mode opératoire décrit dans la demande de brevet EP 2 266 819 A1 ou bien par une étape de stripping de la solution contenant le SBR solution. La fonction amine peut être une amine primaire, secondaire ou tertiaire, de préférence tertiaire.

On notera également que les blocs ont une hauteur radiale maximale Hmax à l'état neuf relativement faible. Cette hauteur radiale est comprise entre 5,5 mm et 9 mm et de préférence entre 6 mm et 7,5 mm. Cette hauteur radiale relativement faible pourrait pénaliser l'adhérence sur un sol mouillé. Ainsi grâce à l'invention, la hauteur radiale est compensée par le fort élancement de la bande de roulement et par les caractéristiques du matériau utilisé contenant le SBR solution. Ceci permet d'assurer dans le temps une bonne adhérence du pneumatique sur un sol mouillé.

L'invention n'est pas limitée aux modes de réalisation et variantes présentées et d'autres modes de réalisation et variantes apparaîtront clairement à l'homme du métier sans sortir du cadre défini par les revendications ci-jointes.

Ainsi, aux figures 1 à 7 il est présenté des modes de réalisation dans lesquels la bande de roulement comporte au moins trois types de pas différents. En variante, le bande de roulement comporte un seul type de pas P. Le pneumatique est alors dit monopas. La densité d'incision SD correspond ainsi à la somme des longueurs projetées des incisions selon la direction axiale Y sur le produit du pas P du motif et de la largeur W de la bande de roulement, l'ensemble étant

$$\text{SD} = \frac{\sum_{i=1}^{n} lpyi}{P*W} * 1000$$

multiplié par 1000, tel que                    avec n le nombre d'incisions dans le motif et lpyi la longueur projetée de la ième incision. La densité d'incision est comprise entre 10 mm$^{-1}$ et 70 mm$^{-1}$. Préférentiellement, la densité d'incision SD est supérieure à 25 mm$^{-1}$ et/ou inférieure à 50 mm$^{-1}$. Préférentiellement, la densité d'incision SD est comprise entre 30 mm$^{-1}$ et 40 mm$^{-1}$.

Ainsi, à la figure 7 il est présenté une bande de roulement 10 comportant un seul sillon central. En variante, la bande de roulement comprend un nombre de sillons supérieur à 1. Dès lors, le CSR correspond au rapport de la somme

$$CSR = \frac{\sum_{j>1}^{m} Wsj}{W}$$

des largeurs des sillons sur la largeur de la bande de roulement, tel que                    avec m le nombre de sillons dans la bande de roulement et Wsj la largeur du jième sillon. Le CSR pour une bande de roulement comprenant au moins deux sillons est inférieur ou égal à 0,15.

Ainsi, comme il est illustré aux figures 1 à 7, la nervure de matière centrale formée par les troisièmes blocs a globalement une faible largeur. En variante, la largeur de cette nervure de matière centrale correspond à au moins le tiers de la largeur W de la bande de roulement.

**Revendications**

1. Pneumatique comportant une bande de roulement (10) directionnelle, ladite bande de roulement comprenant un axe central (12) et deux bords (14A, 14B) encadrant ledit axe central (12) et déterminant une largeur de bande de roulement W, ladite largeur de bande de roulement W étant supérieure ou égale à 140 mm, ladite bande de roulement (10) comprenant une pluralité de motifs (13) qui se succèdent selon la direction circonférentielle, chaque motif ayant un pas P, les motifs (13) délimitant une pluralité de rainures obliques (16A, 16B), chaque rainure oblique s'étendant d'un des bords (14A, 14B) de la bande de roulement en direction de l'axe central (12) mais sans atteindre ledit axe central (12),

   - dans une partie centrale de la bande de roulement centrée sur l'axe central (12) et de largeur correspondant à 80% de la largeur W de ladite bande de roulement, tout ou partie des rainures obliques (16A, 16B) de la pluralité de rainures obliques ayant un élancement E compris entre 0,85 et 1,5 et de préférence entre 0,87 et 1,1, ledit élancement correspondant au rapport entre une longueur projetée Lpx de la rainure oblique selon la direction circonférentielle (X) avec la moitié de la largeur de la partie centrale de la bande de roulement (10),

   $$E = \frac{Lpx}{0,4*W}$$

   tel que , ledit pneumatique étant **caractérisé en ce que**:
   - tout ou partie des motifs comprend au moins une incision (181, 182, 183, 184, 185, 186), une densité d'incision SD dans tout ou partie de ces motifs étant comprise entre 10 mm$^{-1}$ et 70 mm$^{-1}$, ladite densité d'incision SD correspondant au rapport entre la somme de la/des longueur(s) projetée(s) lpyi de la/des incision(s) selon une direction axiale (Y) sur le produit du pas P du motif et de la largeur W de la bande de roulement, l'ensemble étant multiplié par 1000, tel que SD = $\frac{\sum_{i=1}^{n} lpyi}{P*W} * 1000$ , avec n le nombre d'incisions dans le motif et lpyi la longueur projetée de la ième incision.

2. Pneumatique selon la revendication 1, dans lequel la bande de roulement comprend différent types de motifs Mj, avec j supérieur ou égal à 2, les motifs appartenant à un même type de motif ayant un même pas, le pas entre des motifs appartenant à deux types de motifs différents étant différent, et en ce que la densité moyenne d'incisions SDmoy est comprise entre 10 mm$^{-1}$ et 70 mm$^{-1}$, ladite densité moyenne d'incisions SDmoy correspondant à la moyenne des densités d'incisions SDj des motifs des différents types de motifs Mj sur toute la circonférence de la bande de roulement, ladite densité moyenne d'incisions SDmoy étant pondérée en fonction du nombre de motifs Nj par type de motif Mj et du pas Pj des motifs appartenant au type de motif Mj sur ladite circonférence de la bande de roulement, tel que $SDmoy = \frac{\sum_{j=1}^{m}(SDj*Nj*Pj)}{\sum_{j=1}^{m}(Nj*Pj)}$ avec m le nombre de types de motifs différents, SDj la densité d'incisions dans un motif appartenant au type de motif Mj, Pj le pas des motifs appartenant au type de motif Mj, Nj le nombre de motifs appartenant au type de motif Mj.

3. Pneumatique selon la revendication 1 ou la revendication 2, dans lequel la densité d'incision SD ou la densité moyenne d'incision SDmoy est supérieure à 25 mm$^{-1}$ et/ou inférieure à 50 mm$^{-1}$.

4. Pneumatique selon l'une quelconque des revendications 1 à 3, dans lequel la densité d'incision SD ou la densité moyenne d'incision SDmoy est comprise entre 30 mm$^{-1}$ et 40 mm$^{-1}$.

5. Pneumatique selon l'une quelconque des revendications 1 à 4, dans lequel la bande de roulement comprend au moins un sillon (21) et la largeur Ws du ou des sillon(s) est déterminée de sorte que le rapport (CSR) de la somme des largeurs Ws du ou des sillons sur la largeur W de la bande de roulement est inférieur ou égal à 0.15.

6. Pneumatique selon l'une quelconque des revendications 1 à 5, chaque motif (13) comprenant un ensemble de bloc comportant au moins un bloc (171, 172, 173, 174, 175), dans lequel ledit bloc a une hauteur radiale maximale Hmax à l'état neuf comprise entre 5,5 mm et 9 mm et de préférence entre 6 mm et 7,5 mm.

7. Pneumatique selon la revendication 6, le ou les blocs (17 ; 171, 172, 173, 174, 175) étant en matériau caoutchoutique, dans lequel la composition dudit matériau caoutchoutique a une température de transition vitreuse Tg comprise entre -40°C et - 10°C et préférentiellement entre -35°C et -15°C et un module complexe de cisaillement dynamique G* mesuré à 60°C compris entre 0,5 MPa et 2 MPa, et préférentiellement entre 0,7 MPa et 1,5 MPa.

8. Pneumatique selon l'une des revendications 6 ou 7, dans lequel la composition du bloc comprend un mélange élastomérique, ledit mélange élastomérique comportant un élastomère diénique modifié comprenant au moins un groupe fonctionnel comprenant un atome de silicium, ce dernier se situant au sein de la chaîne principale de l'élastomère y compris les extrémités de chaîne.

9. Pneumatique selon la revendication 8, dans lequel l'élastomère diénique modifié comprend un groupe fonctionnel comprenant un atome de silicium, ledit élastomère étant un élastomère modifié comprenant au moins une fonction silanol située en une extrémité de la chaîne principale de l'élastomère.

10. Pneumatique selon la revendication 8, dans lequel le groupe fonctionnel est choisi parmi une fonction silanol ou un groupement polysiloxane ayant une extrémité silanol.

11. Pneumatique selon la revendication 8, dans lequel l'élastomère diénique modifié comprenant un groupe fonctionnel comprenant un atome de silicium est un élastomère modifié comprenant au sein de sa structure au moins un groupe alcoxysilane lié à l'élastomère par l'atome de silicium, et au moins une fonction comprenant un atome d'azote.

12. Pneumatique selon la revendication 10, dans lequel l'élastomère diénique modifié est majoritairement fonctionnalisé en milieu de chaîne par un groupe alcoxysilane lié aux deux branches de l'élastomère diénique modifié par l'intermédiaire de l'atome de silicium.

13. Pneumatique selon la revendication 10 ou la revendication 11 dans lequel l'élastomère diénique modifié présente au moins deux, de préférence l'ensemble des caractéristiques suivantes :

- la fonction comprenant un atome d'azote est une amine tertiaire, plus particulièrement un groupement diéthylamino- ou diméthylamino-,
- la fonction comprenant un atome d'azote est portée par le groupe alcoxysilane par l'intermédiaire d'un groupement espaceur défini comme un radical hydrocarboné aliphatique en $C_1$-$C_{10}$, plus préférentiellement encore le radical hydrocarboné linéaire en $C_2$ ou $C_3$,
- le groupe alcoxysilane est un méthoxysilane ou un éthoxysilane, éventuellement partiellement ou totalement hydrolysé en silanol.

14. Pneumatique selon l'une quelconque des revendications 8 à 12, dans lequel l'élastomère diénique modifié est un copolymère butadiène-styrène.

15. Pneumatique selon l'une quelconque des revendications 8 à 13, dans lequel l'élastomère diénique modifié présente une température de transition vitreuse comprise dans un domaine allant de -105°C à -70°C.

16. Pneumatique selon l'une quelconque des revendications 1 à 14, dans lequel ledit pneumatique a une certification hiver 3PMSF, ladite certification étant indiquée sur un flanc du pneumatique.

**Patentansprüche**

1. Reifen mit einem laufrichtungsgebundenen Laufstreifen (10), wobei der Laufstreifen eine zentrale Achse (12) und zwei Ränder (14A, 14B) umfasst, die die zentrale Achse (12) einrahmen und eine Laufstreifenbreite W bestimmen, wobei die Laufstreifenbreite W größer als oder gleich 140 mm ist, wobei der Laufstreifen (10) eine Mehrzahl von Mustern (13) umfasst, die entlang der Umfangsrichtung aufeinander folgen, wobei jedes Muster eine Schrittweite P hat, wobei die Muster (13) eine Mehrzahl von schrägen Nuten (16A, 16B) begrenzen, wobei sich jede schräge Nut von einem der Ränder (14A, 14B) des Laufstreifens in Richtung der zentralen Achse (12) erstreckt, ohne jedoch die zentrale Achse (12) zu erreichen,

- wobei in einem zentralen Teil des Laufstreifens, der auf die zentrale Achse (12) zentriert ist und eine Breite entsprechend 80 % der Breite W des Laufstreifens hat, alle oder ein Teil der schrägen Nuten (16A, 16B) der Mehrzahl von schrägen Nuten einen Schlankheitsgrad E zwischen 0,85 und 1,5 und bevorzugt zwischen 0,87 und 1,1 haben, wobei der Schlankheitsgrad dem Verhältnis zwischen einer projizierten Länge Lpx der schrägen Nut entlang der Umfangsrichtung (X) zur Hälfte der Breite des zentralen Teils des Laufstreifens (10) entspricht, so dass $E = \frac{Lpx}{0,4*W}$, wobei der Reifen **dadurch gekennzeichnet ist, dass**:

- alle oder ein Teil der Muster mindestens einen Einschnitt (181, 182, 183, 184, 185, 186) umfassen, wobei eine Einschnittdichte SD in allen oder einem Teil dieser Muster zwischen 10 mm$^{-1}$ und 70 mm$^{-1}$ beträgt, wobei die Einschnittdichte SD dem Verhältnis zwischen der Summe der projizierten Länge(n) lpyi des Einschnitts/der Einschnitte entlang einer axialen Richtung (Y) und dem Produkt aus der Schrittweite P des Musters und der Breite W des Laufstreifens entspricht, wobei das Ganze mit 1000 multipliziert wird, so dass

$$SD = \frac{\sum_{i=1}^{n} lpyi}{P*W} * 1000$$

, worin n die Anzahl von Einschnitten in dem Muster und lpyi die projizierte Länge des i-ten Einschnitts ist.

2. Reifen nach Anspruch 1, bei dem der Laufstreifen verschiedene Mustertypen Mj mit j größer als oder gleich 2 umfasst, wobei die einem selben Mustertyp angehörenden Muster eine selbe Schrittweite haben, wobei die Schrittweite zwischen Muster, die zwei verschiedenen Mustertypen angehören, verschieden ist, und dadurch, dass die mittlere Einschnittdichte SDmoy zwischen 10 mm$^{-1}$ und 70 mm$^{-1}$ beträgt, wobei die mittlere Einschnittdichte SDmoy dem Mittelwert der Einschnittdichten SDj der Muster der verschiedenen Mustertypen Mj über den gesamten Umfang des Laufstreifens entspricht, wobei die mittlere Einschnittdichte SDmoy in Abhängigkeit von der Anzahl von Mustern Nj je Mustertyp Mj und von der Schrittweite Pj der dem Mustertyp Mj angehörenden Muster über den Umfang des Laufstreifens gewichtet wird, so dass $SDmoy = \frac{\sum_{j=1}^{m} (SDj*Nj*Pj)}{\sum_{j=1}^{m} (Nj*Pj)}$, worin m die Anzahl verschiedener Mustertypen ist, SDj die Einschnittdichte in einem dem Mustertyp Mj angehörenden Muster ist, Pj die Schrittweite der dem Mustertyp Mj angehörenden Muster ist, Nj die Anzahl der dem Mustertyp Mj angehörenden Muster ist.

3. Reifen nach Anspruch 1 oder Anspruch 2, bei dem die Einschnittdichte SD oder die mittlere Einschnittdichte SDmoy größer als 25 mm$^{-1}$ und/oder kleiner als 50 mm$^{-1}$ ist.

4. Reifen nach einem der Ansprüche 1 bis 3, bei dem die Einschnittdichte SD oder die mittlere Einschnittdichte SDmoy zwischen 30 mm$^{-1}$ und 40 mm$^{-1}$ beträgt.

5. Reifen nach einem der Ansprüche 1 bis 4, bei dem der Laufstreifen mindestens eine Rille (21) umfasst und die Breite Ws der Rille(n) so bestimmt wird, dass das Verhältnis (CSR) der Summe der Breiten Ws der Rille(n) zur Breite W des Laufstreifens kleiner als oder gleich 0,15 ist.

6. Reifen nach einem der Ansprüche 1 bis 5, wobei jedes Muster (13) eine Blockanordnung mit mindestens einem Block (171, 172, 173, 174, 175) umfasst, in welcher der Block eine maximale radiale Höhe Hmax im Neuzustand zwischen 5,5 mm und 9 mm und bevorzugt zwischen 6 mm und 7,5 mm hat.

7. Reifen nach Anspruch 6, wobei der oder die Blöcke (17; 171, 172, 173, 174, 175) aus Kautschukmaterial sind, wobei die Zusammensetzung des Kautschukmaterials eine Glasübergangstemperatur Tg zwischen -40 °C und -10 °C und bevorzugt zwischen -35 °C und -15 °C und einen komplexen dynamischen Schermodul G*, gemessen bei 60 °C, zwischen 0,5 MPa und 2 MPa und bevorzugt zwischen 0,7 MPa und 1,5 MPa hat.

8. Reifen nach einem der Ansprüche 6 oder 7, bei dem die Zusammensetzung des Blocks eine Elastomermischung umfasst, wobei die Elastomermischung ein modifiziertes Dienelastomer beinhaltet, das mindestens eine funktionelle Gruppe umfasst, die ein Siliciumatom umfasst, wobei sich Letzteres in der Hauptkette des Elastomers einschließlich der Kettenenden befindet.

9. Reifen nach Anspruch 8, bei dem das modifizierte Dienelastomer eine funktionelle Gruppe umfasst, die ein Siliciumatom umfasst, wobei das Elastomer ein modifiziertes Elastomer ist, das mindestens eine Silanolfunktion umfasst, die sich an einem Ende der Hauptkette des Elastomers befindet.

10. Reifen nach Anspruch 8, bei dem die funktionelle Gruppe unter einer Silanolfunktion oder einer Polysiloxangruppierung, die ein Silanolende hat, gewählt ist.

11. Reifen nach Anspruch 8, bei dem das modifizierte Dienelastomer, das eine funktionelle Gruppe umfasst, die ein Siliciumatom umfasst, ein modifiziertes Elastomer ist, das in seiner Struktur mindestens eine Alcoxysilangruppe umfasst, die an das Elastomer durch das Siliciumatom gebunden ist, und mindestens eine Funktion, die ein Stickstoffatom umfasst.

12. Reifen nach Anspruch 10, bei dem das modifizierte Dienelastomer mehrheitlich in der Kettenmitte durch eine Alcoxysilangruppe funktionalisiert ist, die an die beiden Zweige des modifizierten Dienelastomers über das Siliciumatom gebunden ist.

13. Reifen nach Anspruch 10 oder Anspruch 11, bei dem das modifizierte Dienelastomer mindestens zwei, bevorzugt alle der folgenden Merkmale aufweist:

   - die Funktion, die ein Stickstoffatom umfasst, ist ein tertiäres Amin, insbesondere eine Diethylamin- oder Dimethylamingruppierung,
   - die Funktion, die ein Stickstoffatom umfasst, wird von der Alcoxysilangruppe über eine Spacer-Gruppierung getragen, die als ein aliphatischer $C_1$-$C_{10}$-Kohlenwasserstoffrest, noch bevorzugter der geradkettige $C_2$- oder $C_3$-Kohlenwasserstoffrest, definiert ist,
   - die Alcoxysilangruppe ist ein Methoxysilan oder ein Ethoxysilan, gegebenenfalls teilweise oder vollständig zu Silanol hydrolysiert.

14. Reifens nach einem der Ansprüche 8 bis 12, bei dem das modifizierte Dienelastomer ein Butadien-StyrolCopolymer ist.

15. Reifen nach einem der Ansprüche 8 bis 13, bei dem das modifizierte Dienelastomer eine Glasübergangstemperatur in einem Bereich von -105 °C bis -70 °C aufweist.

16. Reifen nach einem der Ansprüche 1 bis 14, bei dem der Reifen eine Winterzertifizierung 3PMSF besitzt, wobei diese Zertifizierung auf einer Flanke des Reifens angegeben ist.

**Claims**

1. - Tyre comprising a directional tread (10), said tread comprising a central axis (12) and two edges (14A, 14B) flanking said central axis (12) and determining a tread width W, said tread width W being greater than or equal to 140 mm, said tread (10) comprising a plurality of patterns (13) which succeed one another in the circumferential direction, each pattern having a pitch P, the patterns (13) delimiting a plurality of oblique grooves (16A, 16B), each oblique groove extending from one of the edges (14A, 14B) of the tread in the direction of the central axis (12) but without reaching said central axis (12), in a central part of the tread centred on the central axis (12) and of a width corresponding to 80% of the width W of said tread, all or some of the oblique grooves (16A, 16B) of the plurality of oblique grooves having a slenderness ratio E comprised between 0.85 and 1.5 and preferably between 0.87 and 1.1, said slenderness ratio corresponding to the ratio between a projected length Lpx of the oblique groove in the circumferential direction (X) and half the width of the central part of the tread (10), such that $\mathrm{E} = \frac{Lpx}{0.4*W}$ ; said tyre being **characterized in that** all or some of the patterns comprise at least one sipe (181, 182, 183, 184, 185, 186), a sipes density SD in all or some of these patterns being comprised between 10 mm$^{-1}$ and 70 mm$^{-1}$, said sipes density SD corresponding to the ratio between the sum of the projected length(s) lpyi of the sipe(s) in an axial direction (Y) to the product of the pitch P of the pattern and of the width W of the tread, all then multiplied by 1000, such that $\mathrm{SD} = \frac{\sum_{i=1}^{n} lpyi}{P*W} * 1000$ , where n is the number of sipes in the pattern and lpyi is the projected length of the nth sipe.

2. - Tyre according to Claim 1, **wherein** the tread comprises different pattern types Mj, where j is greater than or equal to 2, the patterns belonging to the one same pattern type having the one same pitch, the pitch between patterns belonging to two different pattern types being different, and in that the mean sipes density SDmean is comprised between 10 mm$^{-1}$ and 70 mm$^{-1}$, said mean sipes density SDmean corresponding to the mean of the sipes densities SDj of the patterns of the different pattern types Mj over the entire circumference of the tread, said mean sipes density SDmean being weighted according to the number of patterns Nj per pattern type Mj and according to the pitch Pj of the patterns belonging to that pattern type Mj over said circumference of the tread, such that

$$SDmean = \frac{\sum_{j=1}^{m}(SDj*Nj*Pj)}{\sum_{j=1}^{m}(Nj*Pj)}$$

, where m is the number of different pattern types, SDj is the sipes density in a pattern belonging to the pattern type Mj, Pj is the pitch of the patterns belonging to the pattern type Mj, and Nj is the number of patterns belonging to the pattern type Mj.

3. - Tyre according to Claim 1 or Claim 2, **wherein** the sipes density SD or the mean sipes density SDmean is greater than 25 mm$^{-1}$ and/or less than 50 mm$^{-1}$.

4. - Tyre according to any one of Claims 1 to 3, **wherein** the sipes density SD or the mean sipes density SDmean is comprised between 30 mm$^{-1}$ and 40 mm$^{-1}$.

5. - Tyre according to any one of Claims 1 to 4, **wherein** the tread comprises at least one tread main groove (21) and the width Ws of the tread main groove(s) is determined such that the ratio (CSR) of the sum of the widths Ws of the tread main groove(s) to the width W of the tread is less than or equal to 0.15.

6. - Tyre according to any one of Claims 1 to 5, each pattern (13) comprising a set of blocks comprising at least one block (171, 172, 173, 174, 175), **wherein** said block has a maximum radial height Hmax when new that is comprised between 5.5 mm and 9 mm and preferably between 6 mm and 7.5 mm.

7. - Tyre according to Claim 6, the block or blocks (17; 171, 172, 173, 174, 175) being made of a rubbery material, **wherein** the composition of said rubbery material has a glass transition temperature Tg comprised between -40°C and -10°C and preferably between -35°C and -15°C and a dynamic complex shear modulus G* measured at 60°C comprised between 0.5 MPa and 2 MPa, and preferably between 0.7 MPa and 1.5 MPa.

8. - Tyre according to either of Claims 6 and 7, **wherein** the composition of the block comprises an elastomer compound, said elastomer compound containing a modified diene elastomer containing at least one functional group comprising a silicon atom, the latter being situated within the main chain of the elastomer, including the ends of the chain.

9. - Tyre according to Claim 8, **wherein** the modified diene elastomer contains a functional group comprising a silicon atom, said elastomer being a modified elastomer containing at least one silanol functional group situated at one end of the main chain of the elastomer.

10. - Tyre according to Claim 8, **wherein** the functional group is chosen from a silanol functional group or a polysiloxane group having a silanol end.

11. - Tyre according to Claim 8, **wherein** the modified diene elastomer containing a functional group comprising a silicon atom is a modified elastomer containing, within its structure, at least one alkoxysilane group bonded to the elastomer via the silicon atom, and at least one functional group comprising a nitrogen atom.

12. - Tyre according to Claim 10, **wherein** the modified diene elastomer is predominantly functionalized in the middle of the chain by an alkoxysilane group bonded to the two branches of the modified diene elastomer via the silicon atom.

13. - Tyre according to Claim 10 or Claim 11, **wherein** the modified diene elastomer exhibits at least two, and preferably all, of the following characteristics : the functional group comprising a nitrogen atom is a tertiary amine, more particularly a diethylamino- or dimethylamino- group; the functional group comprising a nitrogen atom is borne by the alkoxysilane group via a spacer group defined as an aliphatic $C_1$-$C_{10}$ hydrocarbon-based radical, more preferentially still the linear $C_2$ or $C_3$ hydrocarbon-based radical; the alkoxysilane group is a methoxysilane or an ethoxysilane, optionally partially or completely hydrolysed to give silanol.

14. - Tyre according to any one of Claims 8 to 12, **wherein** the modified diene elastomer is a butadiene/styrene copolymer.

15. - Tyre according to any one of Claims 8 to 13, **wherein** the modified diene elastomer exhibits a glass transition temperature comprised within a range extending from -105°C to -70°C.

16. - Tyre according to any one of Claims 1 to 14, **wherein** said tyre has a 3PMSF winter certification, said certification being indicated on a sidewall of the tyre.

FIG. 1

FIG. 2

FIG. 3

FIG. 4

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2240522 A
- EP 3156259 A1
- EP 0778311 A1
- WO 2011042507 A1
- WO 2009133068 A1
- WO 2015018743 A1
- WO 2015018774 A1
- WO 2015018772 A1
- EP 2285852 A
- EP 2266819 A1
- EP 0778311 A